# EUROPÄISCHE PATENTANMELDUNG

(11) **EP 0 899 224 A2**
(43) Veröffentlichungstag der Anmeldung: **03.03.1999**
(21) Anmeldenummer: 98112760.8
(22) Anmeldetag: 09.07.1998
(51) Int. Cl.: B65G 53/56

(54) **Rohrweiche mit sphärischem Küken**

(30) Priorität: 21.08.1997 DE 19736484
(71) Anmelder: Waeschle Maschinenfabrik GmbH, 88250 Weingarten (DE)
(72) Erfinder: Rost, Eugen, 88364 Wolfegg-Wassers (DE)
(74) Vertreter: Prietsch, Reiner, Dipl.-Ing.

(57) **Zusammenfassung**

Eine Rohrweiche hat ein Küken (6) mit einer sphärisch gewölbten Umfangsfläche und Mündungen für zumindest einen Durchgangskanal. Das Küken ist um eine Drehachse (10) in einem Gehäuse (1, 2) drehbar, das eine Zulauföffnung und zwei Auslauföffnungen hat. Die Form des Gehäuses und damit dessen Fertigungsaufwand vereinfachen sich, wenn das Küken (6) aus einer Kugelschicht innerhalb eines von einem Großkreis (8a) begrenzten Kugelvolumens besteht und die jeweiligen Mündungen des Durchgangskanals in der Kugelschicht des Kükens (6) in einer Projektion längs einer gedachten, die Mittelpunkte der jeweiligen Mündungsflächen verbindenden Linie zumindest näherungsweise von im wesentlichen denkungsgleichen Ellipsen begrenzt sind. Diese gedachte Linie ist dabei gegenüber der Drehachse (10) des Kükens (6) versetzt.

## Beschreibung

Die Erfindung betrifft eine Rohrweiche der im Oberbegriff des Anspruches 1 angegebenen Gattung.

Eine derartige Rohrweiche ist aus der DE 41 14 949 C1 bekannt. Die Umfangsfläche des Kükens ist eine Freiformfläche, die nur in erster Näherung und bei Verzicht auf genaue Deckungsgleichheit der Mündungen des Durchgangskanals im Küken mit den korrespondierenden Öffnungen in dem Gehäuse die Fläche einer Kugelschicht ist, die symmetrisch zu einer zur Drehachse des Kükens rechtwinkligen Mittelebene von zwei parallelen Ebenen begrenzt wird. Die Achse des Durchgangskanals ist gegenüber der Drehachse des Kükens versetzt, der Durchgangskanal im übrigen jedoch symmetrisch zu der Mittelebene. Um das Küken montieren und demontieren zu können, ist das Gehäuse in der Mittelebene geteilt. Der Stoß liegt somit auf einem Großkreis in der Drehfläche des Kükens und muß deshalb mit besonderer Sorgfalt bearbeitet sein. Selbst dann sind die gewöhnlich verwendeten Dichtungselemente an dieser Stelle einem durch das Drehen des Kükens verursachten, ererhöhten Verschleiß ausgesetzt.

Der Erfindung liegt die Aufgabe zugrunde, die gattungsgemäße Rohrweiche dahingehend weiterzuentwickeln, daß sich der Fertigungsaufwand für das Gehäuse verringert und ein bereichsweise erhöhter Dichtungsverschleiß vermieden wird.

Diese Aufgabe ist erfindungsgemäß durch die Rohrweiche mit den Merkmalen des Patentanspruches gelöst.

Vorsorglich wird erläutert, daß nach fachmännischem Verständnis unter einer Kugelschicht das von zwei zu einem bestimmten Großkreis der Kugel parallelen Schnittebenen begrenzte Volumen einer Kugel zu verstehen ist.

Der Erfindung liegt die überraschende Erkenntnis zugrunde, daß sich ein stoßfreier Übergang von den Zulauf- und Auslauföffnungen des Gehäuses auf die entsprechenden Mündungen des Durchgangskanals des Kükens auch dann erzielen läßt, wenn der Durchgangskanal oder zumindest dessen Mündungen, anders als bei dem oben genannten Stand der Technik, außerhalb eines Großkreises liegen, sofern man sich von der Vorstellung löst, daß die entsprechenden Querschnitte punktsymmetrisch, also beispielsweise kreisförmig, quadratisch oder rechteckig, sein müssen. Die von dieser Erkenntnis ausgehende Konstruktion der Rohrweiche nach der Erfindung hat den großen Vorteil, die Gehäusetrennebene aus dem Kugelvolumen heraus in die Ebene eines Großkreises oder eine dazu Parallele Ebene legen zu können. Folglich kann das Gehäuse aus einem das Küken aufnehmenden Gehäusekörper und einem diesen verschließenden, im wesentlichen planen Flanschdeckel bestehen. Weder werden dann Dichtungen zwischen dem Flanschdeckel und dem Gehäusekörper von dem Küken berührt, noch überlaufen etwaige, die Mündungen des Durchgangskanals des Kükens umgebende Dichtungen einen Stoß bzw. eine Trennfuge in dem Gehäusekörper.

Die das Küken bildende Kugelschicht, und ebenso die korrespondierende Innenfläche des Gehäuses, müssen nicht vollständig sein. Vielmehr genügt es, wenn die Umfangsflächenbereiche des Kükens und die korrespondierenden Innenflächenbereiche des Gehäuses, die in den jeweiligen Drehstellungen des Kükens aneinandergrenzen, im Bereich der jeweiligen Mündungen als Kugelschichtflächen ausgebildet sind. Durch eine solche "Abmagerung" des Kükens lassen sich beträchtliche Gewichtseinsparungen erzielen. Selbstverständlich wird man bei einer solchen Ausführungsform Toträume zwischen Küken und Gehäuseinnenfläche, in denen sich Schüttgut ansammeln kann, zu vermeiden suchen.

Die konkrete Konstruktion einer Rohrweiche nach dem Patentanspruch richtet sich nach dem jeweiligen Anwendungsfall. Das gilt sowohl für die Querschnittsflächen der Mündungen des Durchgangskanals und der Zulauf- sowie die Auslauföffnungen in dem Gehäuse als auch für den Verlauf des Durchgangskanals und die Größe des Versatzes der die Mittelpunkte der Mündungsflächen verbindenden, gedachten Linie gegenüber der Drehachse des Kükens. Insbesondere braucht der Durchgangskanal nicht geradlinig zu verlaufen. Er kann im Extremfall sogar einen außerhalb der Kugelschicht des Kükens liegenden Abschnitt haben.

In der Zeichnung ist ein Ausführungsbeispiel einer Rohrweiche nach der Erfindung schematisch vereinfacht dargestellt. Es Zeigt:
- Figur 1: eine Rohrweiche im Schnitt durch die Drehachse des Kükens entsprechend der Linie B-B in Fig. 2,
- Figur 2: einen Schnitt entsprechend der Linie A-A in Fig. 1 und

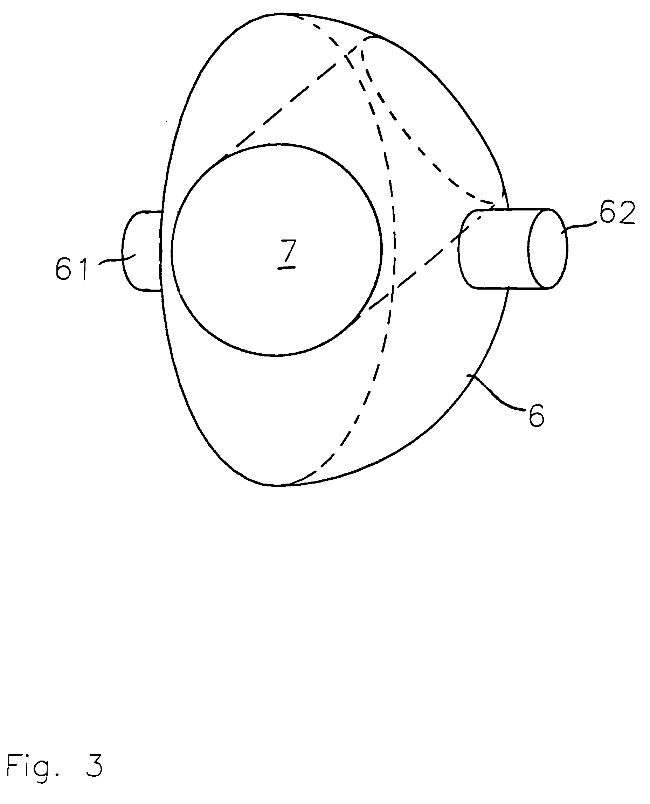

- Figur 3: das Küken in perspektivischer Darstellung.

Die in der Zeichnung dargestellte Rohrweiche besteht aus einem durch einen Flanschdeckel 1 verschlossenen Gehäusekörper 2 mit einer Zulauföffnung 3 und zwei Auslauföffnungen 4, 5. In dem Gehäuse 1, 2 ist ein Küken 6 um eine Drehachse 10 drehbar gelagert. Das Küken 6 hat hierzu beiderseits Achsstummel 61, 62, die in Lagern 11 aufgenommen sind und von denen einer aus dem Gehäuse 1, 2 zur Verbindung mit einem geeigneten Drehantrieb herausgeführt ist.

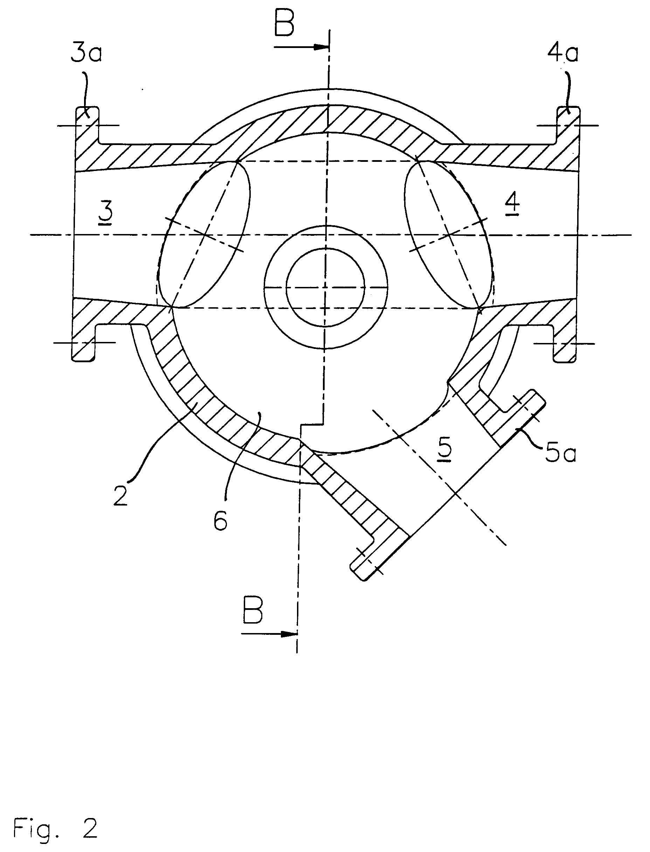

Das Küken 6 hat einen Durchgangskanal 7, der in der in Figur 2 gezeigten Stellung die Zulauföffnung 3 mit der Auslauföffnung 4 im geraden Durchgang verbindet. In der anderen Stellung verbindet der Durchgangskanal 7 die Zulauföffnung 3 mit der anderen Auslauföffnung 5.

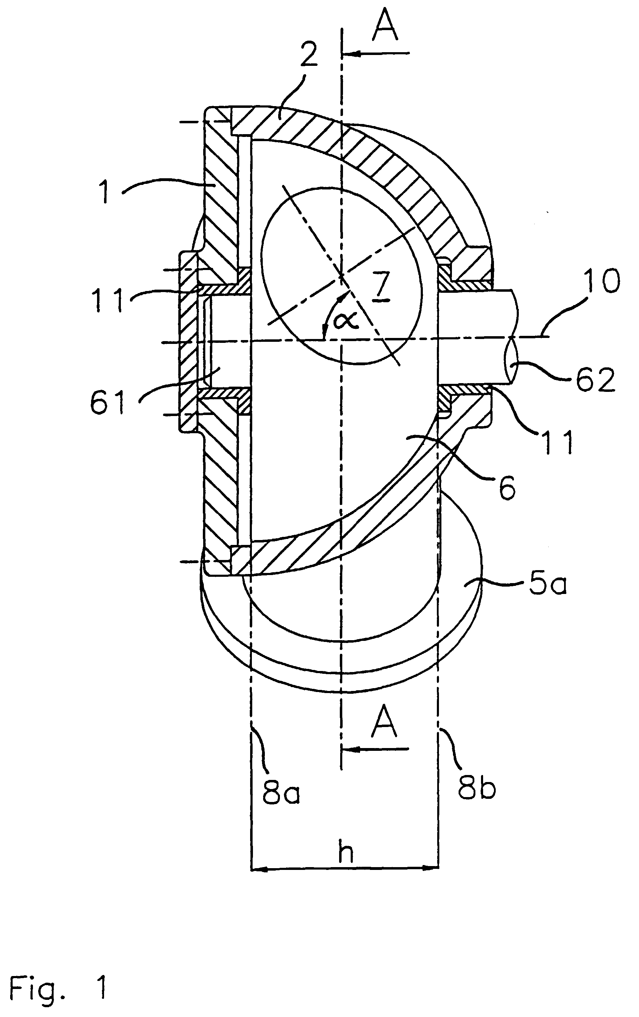

Das Küken 6 ist in diesem Ausführungsbeispiel im wesentlichen eine Halbkugel, besteht also aus einer Kugelschicht mit der Höhe h, die von dem Großkreis in der Ebene 8a bis zu dem Kleinkreis in der Ebene 8b reicht (siehe Figur 1). Die beiden Mündungen des Durchgangskanals 7 liegen nahe der Umfangsfläche des Kükens 6, genauer gesagt in der Ebene je einer von der Kugelschicht abgeschnittenen Kugelkappe, deren Achse durch den Mittelpunkt der Vollkugel geht, der die das Küken bildende Kugelschicht angehört. Dabei ist die Lage der die Kugelkappen abschneidenden Schnittebenen so gewählt, daß die beiden Mündungen des Durchgangskanals 7, gesehen oder projiziert in Richtung einer die Mittelpunkte der Mündungen verbindenden Linie, Ellipsen sind, die gegenüber der Drehachse des Kükens 6 nach oben versetzt sind und deren jeweilige große Achse um einen Winkel α, bezogen auf die Drehachse 10 in der Projektion gemäß Fig. 1, gedreht ist.

Die Zulauföffnung 3 und die Auslauföffnungen 4 und 5 sind von mit diesen Ellipsen deckungsgleichen Ellipsen begrenzt, so daß sich ein stoßfreier Übergang ergibt. Dieser somit elliptische Querschnitt geht in Richtung der Anschlußflansche 3a, 4a und 5a kontinuierlich in einen Kreisquerschnitt über, damit die Rohrweiche problemlos an Rohrleitungen mit Kreisquerschnitt anschließbar ist. Hingegen ist in dem Ausführungsbeispiel der Querschnitt des Durchgangskanals 7 in dem Küken 6 auf der ganzen Länge elliptisch. Es versteht sich von selbst, daß die Flächen der elliptischen Querschnitte mindestens gleich den Kreisquerschnittflächen (z.B. in Höhe der Anschlußflansche 3a, 4a und 5a) sind.

Der Versatz der die Mittelpunkte der Mündungen des Durchgangskanals 7 verbindenden Linie, die in diesem Ausführungsbeispiel gleichzeitig die Mittelachse des Durchgangskanals 7 ist, sowie der vorgenannte Winkel α (vgl. Figur 1) ergeben sich aus dem Abstand der die Mittelpunkte der Ellipsen verbindenden Linie zum Großkreis der Kugelschicht, den benötigten Förderquerschnitten (also dem daraus folgenden Rohrdurchmesser in Höhe der Anschlußflansche), der Höhe h der Kugelschicht und der Lage der Zulauföffnung 3 sowie der Auslauföffnungen 4 und 5, insbesondere dem Winkel, den die Achse der Auslauföffnung 5 mit derjenigen der Zulauföffnung 3 einschließt.

## Patentansprüche

1. Rohrweiche für eine Anlage zur pneumatischen Förderung von Schüttgut, mit einem Küken (6), dessen Umfangsfläche zumindest teilweise sphärisch gewölbt ist und Mündungen für mindestens einen Durchgangskanal (7) hat, und das um eine zu einem Großkreis einer die Umfangsfläche enthaltenden Kugel rechtwinklige Drehachse (10) in einem Gehäuse (1, 2) drehbar ist, das eine zu der Umfangsfläche des Kükens (6) korrespondierende Innenfläche und mindestens eine Zulauföffnung (3) sowie mindestens zwei Auslauföffnungen (4, 5) hat, die über den Durchgangskanal (7) des Kükens (6) zumindest im wesentlichen stoßfrei verbindbar sind, **dadurch gekennzeichnet,** daß das Küken (6) eine Kugelschicht innerhalb eines von dem Großkreis (8a) begrenzten Kugelvolumens umfaßt und daß die jeweiligen Mündungen des Durchgangskanals (7) in der Kugelschicht des Kükens (6) in einer Projektion längs einer gedachten, die Mittelpunkte der jeweiligen Mündungsflächen verbindenden Linie zumindest näherungsweise von im wesentlichen deckungsgleichen Ellipsen begrenzt sind, wobei diese gedachte Linie gegenüber der Drehachse (10) des Kükens (6) versetzt ist und die großen Achsen der Ellipsen in einer Projektion in Richtung dieser gedachten Linie mit der Drehachse (10) des Kükens (6) einen Winkel (α) einschließen, der umso größer ist, je weiter die die Mittelpunkte der Ellipsen verbindende Linie vom Großkreis (8a) beabstandet ist, wobei mit sich vergrößerndem Winkel (α) auch der Versatz der die Mittelpunkte der Ellipsen verbindenden Linie gegenüber der Drehachse (10) des Kükens (6) zunimmt.
